Europäisches Patentamt

European Patent Office

Office européen des brevets

(11) Veröffentlichungsnummer: **0 184 065**
**B1**

(12) **EUROPÄISCHE PATENTSCHRIFT**

(45) Veröffentlichungstag der Patentschrift:
13.09.89

(51) Int. Cl.⁴: **B 23 C 3/06**

(21) Anmeldenummer: 85114663.9

(22) Anmeldetag: 18.11.85

(54) Fräsmaschine, insbesondere zur Herstellung von Kurbel- und Nockenwellen.

(30) Priorität: 16.11.84  DE 3442025

(43) Veröffentlichungstag der Anmeldung:
11.06.86 Patentblatt 86/24

(45) Bekanntmachung des Hinweises auf die Patenterteilung:
13.09.89 Patentblatt 89/37

(84) Benannte Vertragsstaaten:
AT DE FR GB IT

(56) Entgegenhaltungen:
EP-A-0 091 697
DD-A-117 382
DE-A-2 551 250
DE-A-3 302 261

SOVIET INVENTIONS ILLUSTRATED, Sektion P 54,
Woche K 09, 13. April 1983, Abstrakt Nr. D 0281,
Derwent Publications Ltd., London, GB

(73) Patentinhaber: Boehringer Werkzeugmaschinen
GmbH, Stuttgarter Strasse 50 Postfach 220,
D-7320 Göppingen (DE)

(72) Erfinder: Berbalk, Hermann, Ing.- grad.,
Liebensteinstrasse 7, D-7320 Göppingen (DE)
Erfinder: Schrod, Hans, Zeppelinstrasse 1, D-7324
Rechberghausen (DE)

(74) Vertreter: Vogeser, Werner, Dipl.- Ing.,
Patentanwälte Hansmann & Vogeser Albert-
Rosshaupter- Strasse 65, D-8000 München 70 (DE)

## Beschreibung

Die Erfindung betrifft eine Fräsmaschine entsprechend dem Oberbegriff des Anspruchs 1.

Aus dem Prospekt Boe-TI 1007 d/9.79 der Firma Oerlikon-Boehringer GmbH ist eine nach dem Mittellager-Wirbelverfahren unter Verwendung von innenverzahnten Fräswerkzeugen arbeitende Maschine bekannt, bei der der zu bearbeitende Zapfen bei der Bearbeitung eine mittige Lage einnimmt. Während des Rundvorschubes der Werkzeuge werden diese durch eine exzentrisch angeordnetes Lager um die Kurbelwelle herumgeführt. Alle Führungen sind dabei in allen Richtungen geklemmt.

Aus der EP-A-0 091 697 ist ebenfalls eine nach dem Wirbelverfahren arbeitende Maschine bekannt. Das Ausführungsbeispiel zeigt eine mit außenverzahnten Fräswerkzeugen arbeitende Maschine, jedoch ist auch erwähnt, daß eine Bearbeitung auch mit innenverzahnten Fräswerkzeugen erfolgen kann. Letzteres ist jedoch nur dann möglich, wenn der Radius der Werkzeuge so groß ist, daß sie über die zu bearbeitenden Kurbelwellenzapfen greifen. Auch in diesem Fall ist eine Komplettbearbeitung eines Zapfens nur dann möglich, wenn sich dieser in der mittigen Lage befindet, was gerade für die Kurbelzapfen einer Kurbelwelle nicht gilt.

Der Erfindung liegt die Aufgabe zugrunde, die Maschine entsprechend dem Oberbegriff des Anspruchs 1 so auszubilden, daß die Bearbeitung der aussermittig liegenden Kurbelzapfen einer Kurbelwelle in einer Komplettbearbeitung ermöglicht wird.

Gelöst wird diese Aufgabe gemäß der Erfindung durch die im kennzeichenden Teil des Anspruchs 1 angegebenen Merkmale. Zweckmäßige Ausgestaltungen der Erfindung ergeben sich aus den Unteransprüchen.

Durch die vorgeschlagene Ausbildung ergibt sich noch der Vorteil, daß der Radius der Werkzeuge und damit deren Aussenabmessungen möglichst gering gehalten werden können. Ein weiterer Vorteil ist darin zu sehen, daß der Krümmungsradius der Werkzeuge und der zu bearbeitenden Zapfen möglichst nahekommen, was für die auftretenden Schnittkräfte günstig ist.

Die Erfindung wird nachstehend anhand der Fig. 1 bis 5 beispielsweise erläutert.

Es zeigt:

Fig. 1A bis 1D verschiedene Werkzeugstellungen bei der Bearbeitung eines Kurbelzapfens einer Kurbelwelle;

Fig. 2 die Anordnung der Hauptbestandteile des Frässchlittens in Blickrichtung der Werkstückachse;

Fig. 3 einen senkrechten Schnitt durch den Frässchlitten der Fig. 2, wobei die Schnittebene parallel zur Werkstückachse liegt,

Fig. 4 die Anordnung der Hauptbestandteile einer anderen Ausführungsform eines Frässchlittens, und

Fig. 5 einen senkrechten Schnitt durch den Frässchlitten der Fig. 4, wobei die Schnittebene senkrecht zur Werkstückachse liegt.

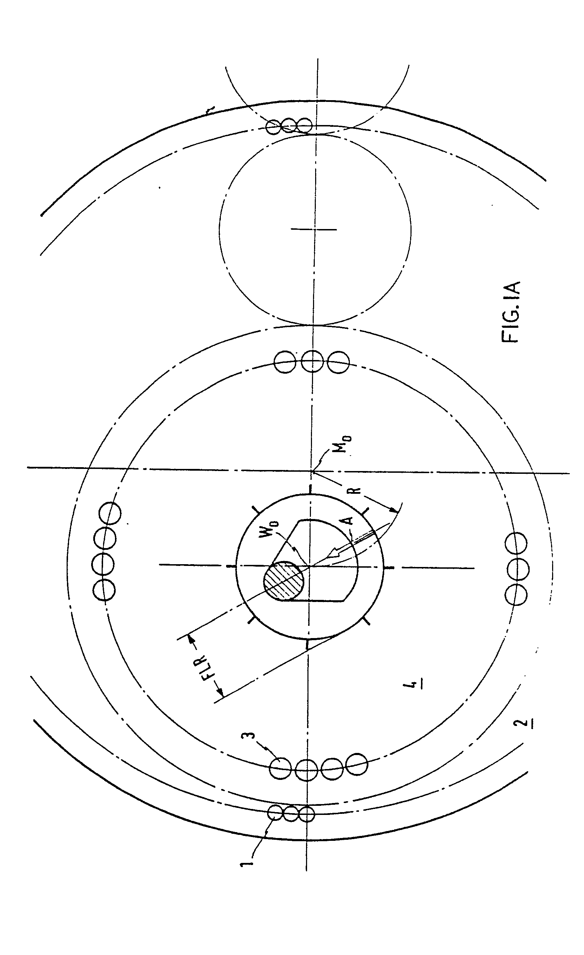

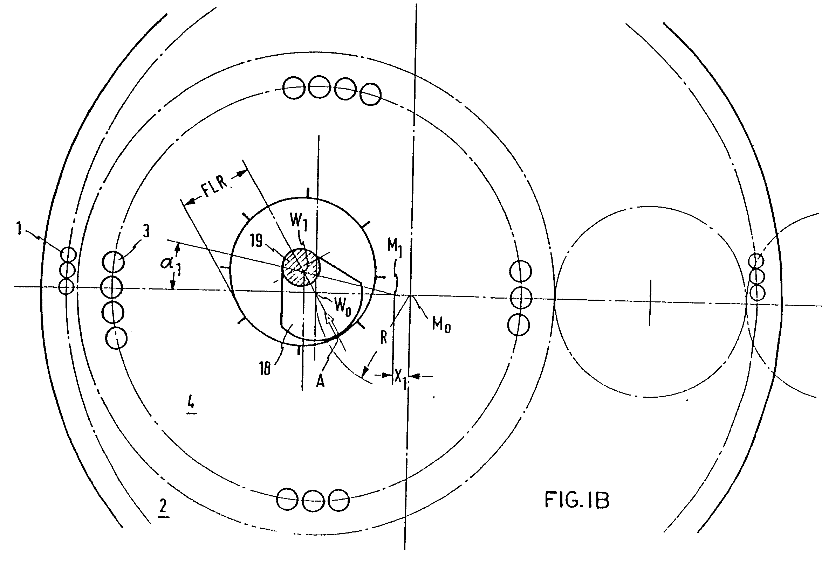

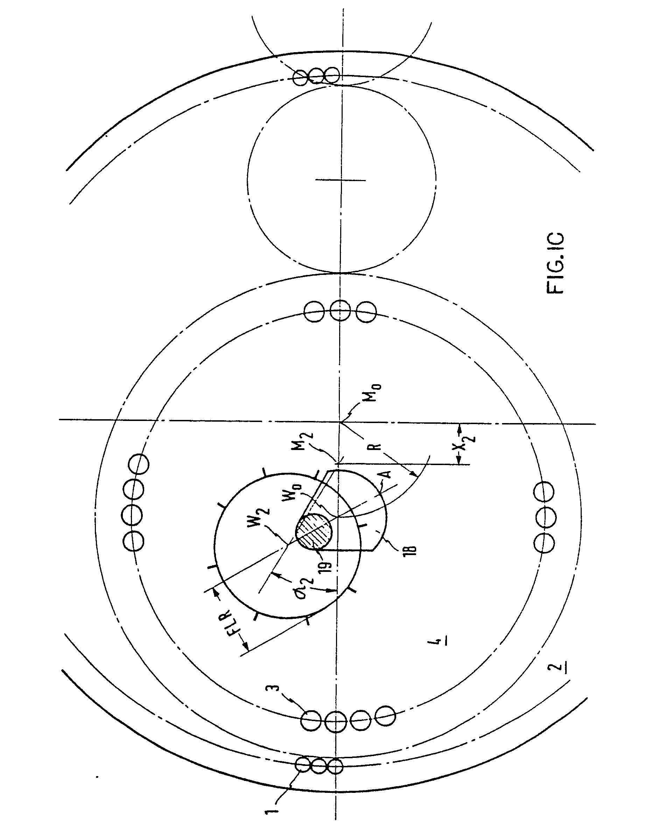

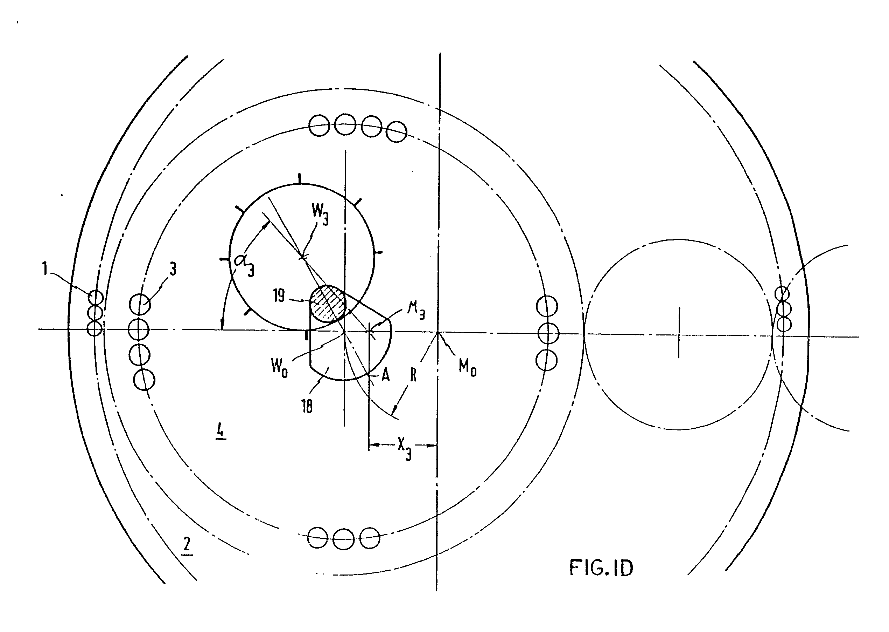

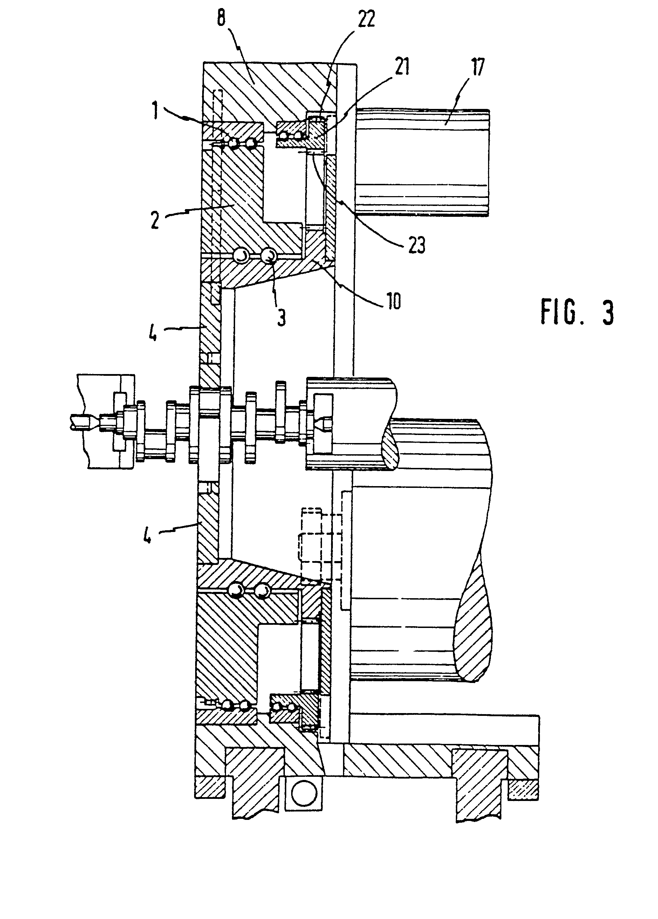

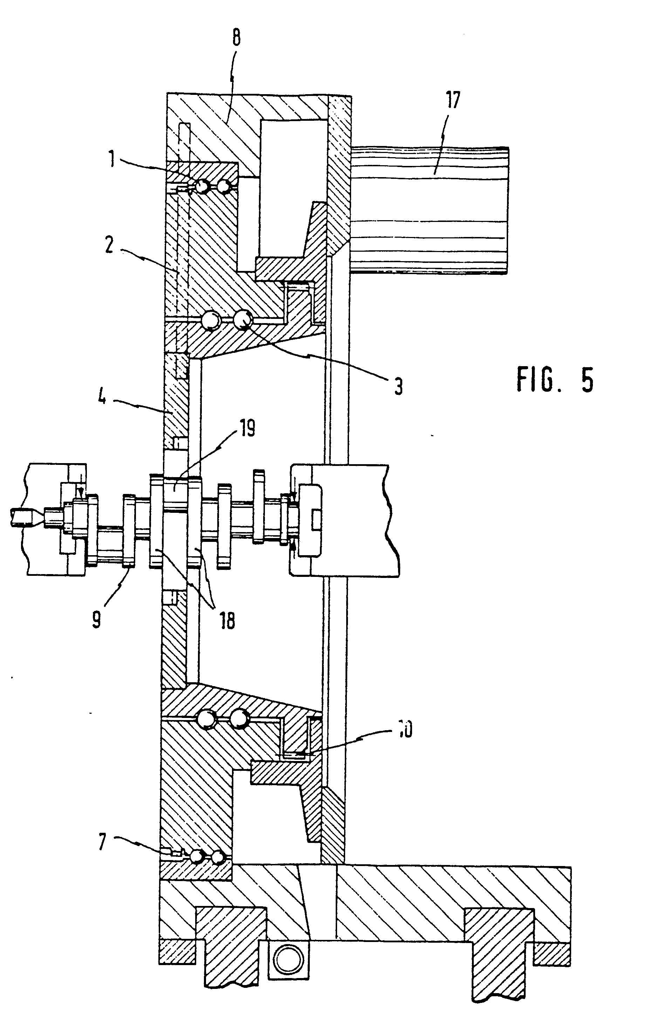

Fig. 1 A - D zeigt, wie bei der Bearbeitung einer Wange 18 und eines Zapfens 19 einer Kurbelwelle (Fig. 5) der Werkzeugmittelpunkt $W_o$ eines Werkzeugs (Fig. 3) eine genau berechnete Bahn beschreiben muß, deren einzelne Punkte durch lineares Verfahrens eines Frässchlittens 8 sowie durch Schwenken einer Schwinge 2 um deren Schwenkmittelpunkt $M_o$ angefahren werden. Wenn der Punkt A der Wange 19 angefahren werden soll, wird der Schwingenmittelpunkt $M_o$ durch lineares Verfahren des ganzen Frässchlittens 8 um das Maß X in die Position $M_1$ gebracht und durch das Schwenken der Schwinge 2 um den Winkel $\alpha_1$ im Uhrzeigersinn wird der Werkzeugmittelpunkt $W_o$ in die Position $W_1$ gebracht. Der Flugkreis FLR und die gewünschte Wangenkontur berühren sich dann im Punkt A. Von der Position $D_1$ aus wird nun zur Bearbeitung der Wangenfläche der Werkzeugmittelpunkt über die Position $W_2$, $W_3$ usw. zurück zum Ausgangspunkt $W_o$ bewegt, wobei jeweils der Schwingenmittelpunkt $M_o$ die mit den entsprechenden Werkzeugmittelpunkten korrespondierenden Positionen $M_2$, $M_3$ usw. einnehmen muß.

Es ist darauf zu achten, daß bei der Bearbeitung des höchsten bzw. tiefsten Punktes einer zu bearbeitenden Kontur der Betrag des Winkels $\alpha$, um den die Schwinge 2 aus der horizontalen Lage geschwenkt wurde, kleiner als 180° ist, da in der "Strecklage", d.h. $\alpha = \pm 90°$, reine Verlagerung des Werkzeugmittelpunktes, und damit des Bearbeitungspunktes, vom Schwingenmittelpunkt $M_o$ radial nach außen, d.h. nach oben bzw. unten, mehr möglich ist.

Die für die Bearbeitung bestimmter Punkte erforderlichen Werkzeugmittelpunkte werden von einem Rechner ermittelt und mittels der NC-Steuerung der Werkzeugmaschine angefahren. Liegt beispielsweise bei einer unrunden Form keine mathematisch bestimmbare Kurve vor, so müssen die einzelnen ermittelten Koordinaten eingegeben werden.

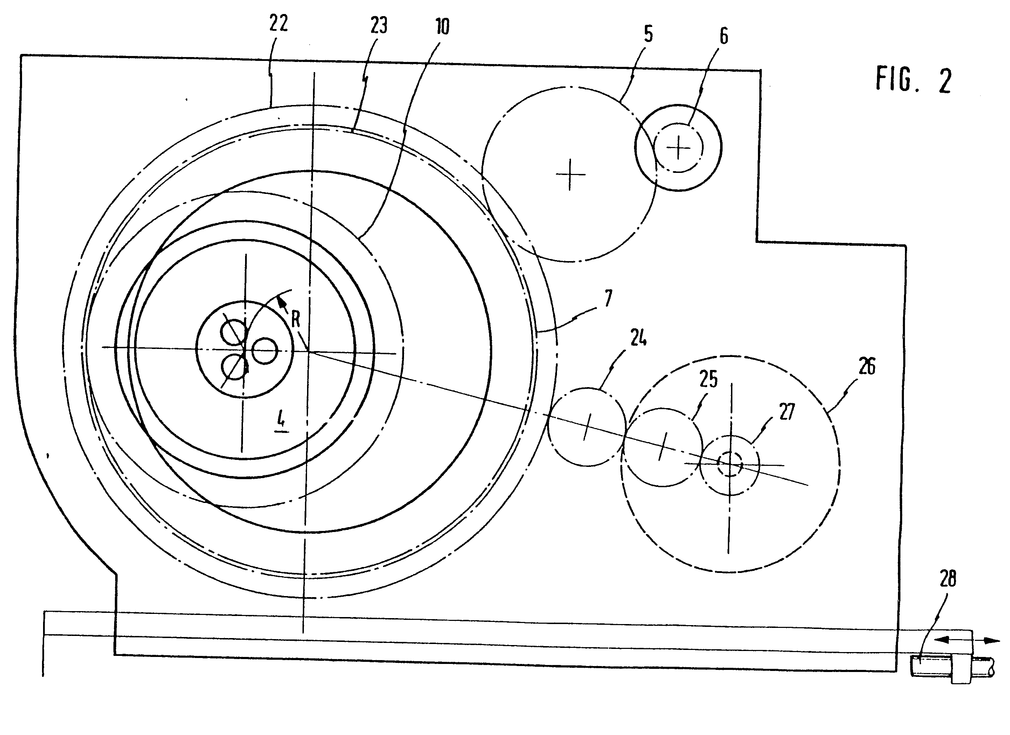

In den Fig. 2 bis 5 ist zu erkennen, wie im Frässchlitten 8 mittels der Lagerung die Schwinge 2 geführt ist, in der wiederum exzentrisch mittels der Lagerung 3 das Werkzeug 4 umläuft. Der Antrieb für die Schwenkbewegung der Schwinge 2 erfolgt über die Zahnräder 7/6/5 durch einen NC-steuerbaren Elektromotor 17. Der Antrieb für die Linearbewegung des Frässchlittens 8 erfolgt mittels der Spindel 28 durch einen NC-steuerbaren Elektromotor, der nicht dargestellt ist.

Bei der in Fig. 2/3 dargestellten Ausführungsform des Frässchlittens greift das zum Werkzeug koaxiale und mit diesem fest verbundene Zahnrad 10 in die Innenverzahnung 23 eines koaxial zum Schwingenmittelpunkt $M_o$ umlaufenden Zahnrades 21 ein, dessen Außenverzahnung 22 über die Zwischenräder 24 und 25 sowie das Ritzel 27 des Motors 26 angetrieben wird.

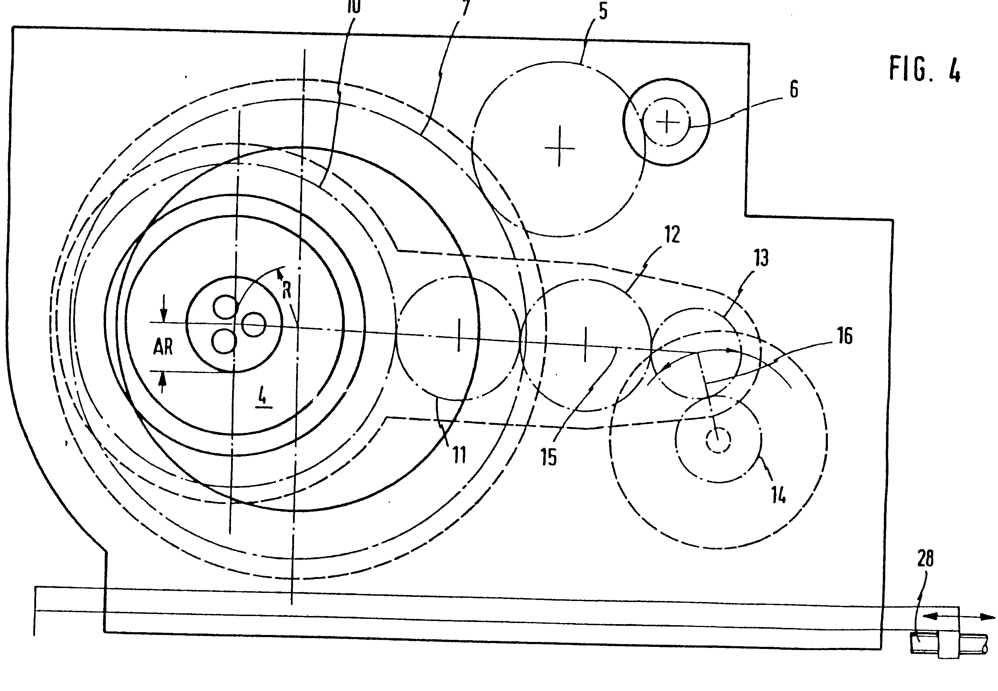

Durch diesen Planetenantrieb des Werkzeuges entfällt die Schwingenanordnung, wie sie in der Ausführungsform der Fig. 4/5 dargestellt ist: Das Werkzeug 4 wird ohne Zwischenschaltung eines zum Schwingenmittelpunkt Mo koaxial laufenden Zahnrades über die Zwischenräder 10/11/12/13 und das Ritzel 14 eines Elektromotors angetrieben, wobei das Werkzeug 4 sowie die Zwischenräder 11 und 12 auf dem Hebelarm 15 angebracht sind und der Antriebsmotor mit dem Ritzel 14 auf dem Hebelarm 16. Anzahl und Größe der Zwischenräder müssen so gewählt werden, daß die Abstandsänderung zwischen dem Mittelpunkt des Ritzels 14 und dem Werkzeugmittelpunkt Wo durch die drehbare Verbindung der Hebelarme 15 und 16 im Mittelpunkt des Zwischenrades 13 ausgeglichen werden kann.

Der Vorteil der Erfindung besteht hauptsächlich darin, daß durch die das Werkzeug ringförmig umschließende Schwingenlagerung eine Weiterleitung der bei der Zerspanung auftretenden Kräfte an den stabilen Frässchlitten bzw. das Maschinengestell möglich wird, ohne daß das Fräswerkzeug aufgrund einer zu schwachen Abstützung die eingestellte Position nicht halten kann.

**Patentansprüche**

1. Fräsmaschine für innenverzahnte Fräswerkzeuge, insbesondere zur Herstellung von Kurbelwellen und ähnlichen Teilen, mit einem linear in einer Ebene normal zur Werkstückachse verschiebbaren Frässchlitten, der eine Frässchwinge (2) mit einem Fräswerkzeug (4) trägt, wobei das Fräswerkzeug (4) exzentrisch in der schwenkbaren Schwinge (2) gelagert ist, und sowohl der Schwenkmittelpunkt (Mo) der Schwinge (2) als auch der Werkzeugmittelpunkt (Wo) innerhalb des Durchmessers der Lagerung der Schwinge (2) im Frässchlitten (8) liegen, dadurch gekennzeichnet, daß der Abstand des Schwenkmittelpunktes (Mo) der Schwinge (2) vom Werkzeugmittelpunkt (Wo) größer als der Radius des Fräswerkzeuges (4) ist.

2. Fräsmaschine nach Anspruch 1 dadurch gekennzeichnet, daß ein innen und außen verzahntes Zahnrad (21), das koaxial zum Schwenkmittelpunkt (Mo) der Schwinge (2) angeordnet ist, im Frässchlitten (8) gelagert ist, und mit dessen Innenverzahnung ein Zahnrad (10) zum Zwecke des Antriebes des Werkzeuges in jeder um den Schwenkmittelpunkt (Mo) der Schwinge (2) geschwenkten Stellung des Werkzeugmittelpunktes (Wo) im Eingriff steht.

3. Fräsmaschine nach Anspruch 1 oder 2, dadurch gekennzeichnet, daß an der Außenverzahnung (22) des Zahnrades (21) über die außerhalb der Schwinge (2) liegenden Zahnräder (24, 25, 27) vom Motor (26) aus der Werkzeugantrieb auf das Zahnrad (10) eingeleitet wird.

4. Fräsmaschine nach einem der Ansprüche 1 bis 3, dadurch gekennzeichnet, daß sowohl Werkzeuge mit nach innen als auch mit nach außen liegenden Schneiden Verwendung finden können.

5. Fräsmaschine nach einem der Ansprüche 1 bis 4, gekennzeichnet durch eine Vorrichtung zur Koordination der Linearbewegung des Frässchlittens (8) und der Schwenkbewegung der Schwinge (2) um auch ohne Drehung des Werkstückes ringförmige Flächen vollständig bearbeiten zu können.

**Claims**

1. Milling machine for internal geared milling tools, particularly for the production of crankshafts and similar components, with a milling slide which can undergo linear displacement in a plane perpendicular to the axis of the workpiece, and which bears a milling rocker (2) with a milling tool (4), the milling tool (4) being mounted eccentrically in the pivotable rocker (2), while both the pivoting centre (Mo) of the rocker (2) and the central point (Wo) of the tool are situated within the diameter of the mounting system of the rocker (2) in the milling slide (8), characterized by the fact that the distance of the pivoting centre (Mo) of the rocker (2) from the central point (Wo) of the tool is greater than the radius of the milling tool (4).

2. Milling machine in accordance with Claim 1, characterized by the fact that a gear wheel 21 having internal and external teeth and situated coaxially to the pivoting centre (Mo) of the rocker (2) is mounted in the milling slide (8), a gear wheel (10) engaging the internal tooth system thereof in order to drive the tool whatever the position to which the central point (Wo) of the tool has been pivoted about the pivoting centre (Mo) of the rocker (2).

3. Milling machine in accordance with Claim 1 or 2, characterized by the fact that on the external tooth system (22) of the gear wheel (21) the tool driving action is transmitted from the motor (26) to the gear wheel (10) via the gear wheels (24, 25, 27) positioned separately from the rocker (2).

4. Milling machine in accordance with one of Claims 1 - 3, characterized by the fact that use can be made of either tools with cutting blades directed inwards or those with blades directed outwards.

5. Milling machine in accordance with one of Claims 1 - 4, characterized by a device for coordinating the linear movement of the milling slide (8) and the pivoting movement of the rocker (2), in order to enable annular surfaces to be completely processed even without rotations of the workpiece.

## Revendications

1. Machine à fraiser pour outils de fraisage à denture intérieure, en particulier pour la fabrication de vilebrequin et de pièces similaires, comportant un chariot de fraisage mobile dans un plan normal par rapport à l'axe de la pièce et qui porte un balancier de fraisage (2) avec un outil à fraiser (4) l'outil à fraiser (4) étant monté excentrique dans le balancier (2) pivotant, et, tant le centre de pivotement (Mo) du balancier (2) qu'également le contre de l'outil (Wo) étant situés à l'intérieur du diamètre de montage du balancier (2) dans le chariot de fraisage (8), caractérisé en ce que la distance entre centre de pivotement (Mo) du balancier (2) et centre de l'outil (Wo) est supérieure au rayon de l'outil à fraiser (4).

2. Machine à fraiser selon la revendication 1, caractérisée en ce qu'une roue dentée intérieurement et extérieurement (21), qui est disposée coaxialement au centre (Mo) du balancier (2), est montée dans le chariot de fraisage et engage avec sa denture intérieure une roue dentée (10) dans le but d'entraîner l'outil en n'importe quelle position de pivotement du centre d'outil (Wo) autour du centre de pivotement (Mo) du balancier (2).

3. Machine à fraiser selon la revendication 1 ou 2, caractérisée en ce que l'entraînement de l'outil est réalisé, à partir du moteur (26), sur la roue dentée (10), sur la denture extérieure (22) de la roue dentée (21), par l'intermédiaire des roues dentées (24, 25, 27) situées à l'extérieur du balancier (2).

4. Machine à fraiser selon l'une des revendications 1 à 3, caractérisée en ce que l'on peut aussi bien utiliser des outils à tranchants tournés vers l'intérieur qu'également à tranchants tournés vers l'extérieur.

5. Machine à fraiser selon l'une des revendications 1 à 4, caractérisée par un dispositif de coordination du mouvement linéaire du chariot de fraisage (8) et du mouvement de pivotement du balancier (2), afin de pouvoir usiner complètement sans tournage de la pièce à usiner des surfaces de forme annulaire.

FIG.1A

FIG.1B

FIG.IC

FIG.ID

FIG. 2

FIG. 3

FIG. 4

FIG. 5